# EUROPÄISCHE PATENTSCHRIFT

(11) **EP 2 791 619 B1**
(45) Veröffentlichungstag und Bekanntmachung des Hinweises auf die Patenterteilung: **30.06.2021**
(21) Anmeldenummer: 12821011.9
(22) Anmeldetag: 11.12.2012
(51) Int. Cl.: G01B 11/25

(54) **VERFAHREN UND VORRICHTUNG ZUR 3D-MESSUNG VON TIEFENLIMITIERTEN OBJEKTEN**
METHOD AND DEVICE FOR THE 3D MEASUREMENT OF DEPTH-LIMITED OBJECTS
PROCÉDÉ ET DISPOSITIF DE MESURE TRIDIMENSIONNELLE D'OBJETS À PROFONDEUR LIMITÉE

(30) Priorität: 16.12.2011 DE 102011121696
(43) Veröffentlichungstag der Anmeldung: 22.10.2014
(73) Patentinhaber: Cognex Ireland Limited, Cork (IE)
(72) Erfinder: KOWARSCHIK, Richard, 07907 Schleiz (DE); GROSSE, Marcus, 07745 Jena (DE); SCHAFFER, Martin, 07743 Jena (DE); HARENDT, Bastian, 07743 Jena (DE)
(74) Vertreter: Meissner Bolte Partnerschaft mbB
(86) Internationale Anmeldenummer: PCT/DE2012/001210
(87) Internationale Veröffentlichungsnummer: WO 2013/087065

(56) Entgegenhaltungen:
- WO-A1-2012/152261
- DE-A1- 19 810 495
- DE-U1-202008 017 962
- None

## Beschreibung

Die Erfindung betrifft ein Verfahren und eine Vorrichtung zur schnellstmöglichen und hochgenauen 3D-Messung von Objekten mit limitierter Tiefe, wobei die limitierte Tiefe des Objektes oder von Bereichen desselben als eine zulässige Maximalabweichung zu einem Referenzobjekt zu verstehen ist. Bei dem Verfahren werden Muster auf das zu vermessende tiefenlimitierte Objekt projiziert, die von im Standort unterschiedlichen Bildansichten als korrespondierende Bildmuster des Objekts, beispielsweise durch Kameras, detektiert werden. Aus dem Vergleich dieser unterschiedlichen Bildmuster werden Rauminformationen für die dreidimensionale Rekonstruktion des Objektes gewonnen.

In vielen Bereichen sind schnell messende optische 3D-Messsysteme erforderlich. So werden zur Analyse von Airbag-Entfaltungen, zur Schadensanalyse von Unfallszenarien, und bei Fahrzeugcrashs bereits optische Verfahren eingesetzt, wobei jedoch nur wenige Zielmarken und damit 3D-Punkte der Szene verfolgt werden bzw. bei dicht messenden Verfahren nur sehr ungenaue 3D-Daten gewonnen werden können.

Für die Qualitätskontrolle von Industriegütern im Fließbandbetrieb sind eine hohe Messrate sowie die Toleranz gegenüber Objektbewegungen entscheidend. Hochgenaue Verfahren zur 3D-Vermessung konnten für diese Messaufgaben bisher nicht eingesetzt werden, da die geforderten, kurzen Messzeiten technisch nicht realisierbar waren.

Für medizinische Zwecke ist die Vermessung von bewegten Körperteilen zur Diagnose von Fehlstellungen hilfreich.

Im Bereich der Sportwissenschaft kann die Analyse der Bewegung von Körperteilen und/oder Personen zur Optimierung von Bewegungsabläufen eingesetzt werden, wobei bisher lediglich Zielmarken eingesetzt werden konnten, und damit nur vereinfachte Modelle mit Daten gespeist werden konnten.

Das gleiche Problem besteht bei der Digitalisierung bewegter Szenen für die multimediale Nutzung, sei es die Bewegung von Schauspielern oder von bewegten Gegenständen.

Insbesondere durch die immer stärkere Verbreitung von 3D-Fernsehen wird die 3D-Digitalisierung in der nahen Zukunft an Bedeutung gewinnen, und damit die Anforderungen an die Qualität von 3D-Aufnahmen zunehmen.

Weiterhin werden in den nächsten Jahren hochauflösende Hochgeschwindigkeitskameras verfügbar sein, da die aktuelle Schnittstellengeneration (z. B. USB 3.0, LightPeak, CoaxExpress, Camera Link) höhere Aufnahmeraten zulässt (bis 2000 Hz bei VGA-Auflösung), und damit die bisher hohen Kamerasystemkosten deutlich sinken werden. In diesem Kontext ist daher die Entwicklung eines schnell und hochgenau messenden Systems für viele Anwendungsbereiche gewünscht.

Bekannt sind Verfahren zur hochgenauen (relative Messunsicherheit < 10⁻⁴) und dichten 3D-Vermessung von Objekten unter Verwendung strukturierter Beleuchtung. Dazu zählen beispielsweise Verfahren der Streifenprojektion (W. Schreiber and G. Notni: Theory and arrangements of self-calibrating whole-body three-dimensional measurement systems using fringe projection technique, Optical Engineering 39, 2000, 159-169; J. Gühring, Dense 3-D surface acquisition by structured light using off-the-shelf components, videometrics and optical methods for 3D shape measurement 4309, 2001, 220-231) oder auch Verfahren unter Verwendung statistischer Muster (DE 196 23 172 C1; A. Wiegmann, H. Wagner, R. Kowarschik: Human face measurement by projecting bandlimited random patterns, Optics Express 14, 2006, 7692-7698). Die Verfahren, welche höchsten Genauigkeitsanforderungen genügen, benötigen zur Realisierung der Messgenauigkeit für beliebige also auch unstetige und getrennte Objekte längere Bildsequenzen (zwischen zehn und 50 Bildern pro Kamera). Aus der Literatur sind keine hochgenau und dicht messenden Verfahren bekannt, welche mit mehr als 15 Hz Aufnahme- und Projektionsrate betrieben werden können, wobei der limitierende Faktor die Projektionstechnik darstellt (M. Schaffer, M. Große, and R. Kowarschik: High-speed pattern projection for three-dimensional shape measurement using laser speckles, Applied Optics 49(18), 2010, 3622-3629; S. Zhang: Recent progresses on real-time 3d shape measurement using digital fringe projection techniques, Optics and Lasers in Engineering 48, 2010, 149-158).

Bekannt sind auch Verfahren zur genauen 3D-Vermessung (relative Messunsicherheit 10⁻³ bis 10⁻⁴), welche mit Sequenzlängen von fünf bis zwanzig Bildern dichte Rekonstruktionen erlauben. Durch speziell angepasste Hardware wurden hier Projektionsraten von bis zu 180 Hz (S. König and S. Gumhold: Image-based motion compensation for structured light scanning of dynamic surfaces, EG Workshop on Dynamic 3D Imaging, 2007; Z. Wang, H. Du, S. Park and H. Xie: Three-dimensional shape mea-surement with a fast and accurate approach, Appl. Opt. 48(6), 2009, 1052-1061) realisiert, da bei der genannten relativen Unsicherheit Einbußen in der Qualität der Musterstruktur tolerierbar sind.

Weiterhin sind neuere Arbeiten zur Hochgeschwindigkeitsvermessung bekannt (Y. Gong and S. Zhang: Ultrafast 3-d shape measurement with an off-the-shelf dlp projector, Optics Express 18(19), 2010, 19743-19754; Y. Wang and S. Zhang: Superfast multifrequency phase-shifting technique with optimal pulse width modulation, Optics Express 19, 2011, 5149-5155; S. S. Gorthi and P. Rastogi: Fringe projection techniques: Whither we are?, Optics and Lasers in Engineering 48, 2010, 133-140; J. Salvi, S. Fernandez, T. Pribanic, and X. Llado: A state of the art in structured light patterns for surface profilometry, Pattern Recognition 43(8), 2010, 2666-2680), welche durch Verwendung spezieller Ansteuersoft- ware und/oder Mustererzeugungseinheiten Projektionsraten von bis zu 10.000 Hz ermög- lichen. Aufgrund der eingesetzten Technik sind bei diesen Projektionsraten nur Binärbilder darstellbar, so dass herkömmliche Verfahren angepasst oder komplett neue Verfahren zur strukturierten Beleuchtung entwickelt werden müssen. Die bisher realisierten relativen Messgenauigkeiten (10⁻² bis 10⁻³) sind allerdings für viele Anwendungen zu ungenau, und oftmals sind unstetige Objekte nicht in ihrer kompletten Form vermessbar.

Alle beschriebenen Verfahren benötigen für die Signalisierung der Objektoberfläche bei komplexen Objekten verschiedene Musterstrukturen, so dass der Einsatz von digitalen Projektoren wie DMD oder LCD-Projektoren zwingend ist, und folglich die maximale Projektionsrate für hohe Messgenauigkeiten technisch auf 255 Hz sowie für schlechtere Messgenauigkeiten durch Projektion von Binärbildern auf 10.000 Hz begrenzt ist. Für viele industrielle Messaufgaben ist die Szenentiefe und Geometrie der Messobjekte bekannt, und nur kleine Abweichungen sind zu inspizieren und zu erfassen. Für diese Messaufgaben sind Streifenprojektionsansätze bekannt, welche bei Verzicht des Gray-Codes und Ausnutzung der Epipolargeometrie mit Sequenzlängen von sechs bis zwölf Mustern dichte und genaue Rekonstruktionen realisieren (Bräuer-Burchardt et. al.: Fringe Projection based high speed 3D sensor for real-time measurements, Proceedings of SPIE 2011). Für die Projektion der Streifen werden bisher stets DLP-Projektoren bzw. LCD-Beamer eingesetzt, so dass die oben ausgeführten Projektionsratenlimitierungen greifen. Weiterhin sind Phasenauswertende Systeme anfällig für eine nicht-diskrete Verschiebung der Streifen, so dass die exakte Verschiebung über einen DLP oder LCD-System benötigt wird, da bei unpräziser Verschiebung die Phasenzuordnung schlechte Ergebnisse produziert.

Weiterhin ist vorgeschlagen worden (DE 10 2011 101 476.8), durch Translation statistischer Muster beliebige Aufnahmeraten zu unterstützen und dabei komplexe 3D-Szenen dicht und genau mit einer Sequenzlänge von ca. 15 Bildern pro Messung vermessen zu können. Für kürzere Bildsequenzen (z. B. mit 6 Bildern pro Messung) würde jedoch der Rauschwert der Messung derart ansteigen, dass diese Messergebnisse zur Auswertung nicht verwendbar werden. Daher können mit diesem Verfahren, was gerade den Vorteil einer schnellen und hochgenauen Auswertung ermöglicht, spezielle Objekte mittels geringerer Bildsequenzen (um insbesondere die Geschwindigkeit der Vermessung weiter zu erhöhen) nicht vermessen werden, da das besagte hohe Rauschmaß für die Auswertbarkeit nicht reduzierbar ist.

DE 198 10 495 A1 und WO 2012/152261 A1 offenbaren jeweils ein Verfahren zur 3D-Messung von tiefenlimitierten Objekten, bei dem zumindest ein optisches Muster zur standortunterschiedlichen Detektion und dreidimensionalen Auswertung dient.

Es wäre deshalb wünschenswert, wenn für solche speziellen Messaufgaben die Sequenzlänge bei Beibehaltung der Genauigkeit weiter verkürzt werden könnte, so dass sich mit kleinerer Aufnahmerate auch extrem hohe Messraten (insbesondere 3D-Rate >500 Hz, d. h. mehr als 500 dreidimensionale Aufnahmen pro Sekunde) realisieren ließen.

Der Erfindung liegt daher die Aufgabe zu Grunde, insbesondere für tiefenlimitierte Messzwecke, eine dreidimensionale Objektauswertung mit geringem Aufwand, mit sehr hoher Messgeschwindigkeit und ohne Einbuße an Messgenauigkeit zu ermöglichen.

Dabei sollen bei hohen Messgenauigkeiten (relative Messgenauigkeit besser als 1.0^{∗}10⁻⁴) extrem hohe 3D-Aufnahmeraten von mehr als 500 Hz erzielbar sein.

Diese Aufgabe wird gelöst durch ein Verfahren zur 3D-Messung von tiefenlimitierten Objekten, wie im Anspruch 1 beansprucht, und durch eine Vorrichtung zur Durchführung des Verfahrens, wie im Anspruch 4 beansprucht.

Bei dem vorgeschlagenen Verfahren ist die Messgenauigkeit unter Verwendung einer einzigen in Form und/oder Lage auf dem Objekt kontinuierlich veränderten optischen Musterstruktur realisiert, wobei allerdings im Gegensatz zur eingangs erwähnten Methode gemäß DE 10 2011 101 476.8 kein statistisches, sondern ein optisches Muster, insbesondere ein an sich bekanntes Streifenmuster, auf das Objekt projiziert wird. Darüber hinaus wird die Korrespondenzzuordnung der wenigstens zwei standortunterschiedlichen zueinander synchronisierten Bildsequenzen für kurze Mess-Sequenzen in dem besagten an die Tiefenlimitierung des Objektes angepassten Suchfeld festgelegt.

Durch diese Einschränkung des Suchraumes werden die Anforderungen an die Kodierung jeder Punktzuordnung verringert, so dass sich schon mit kürzeren Sequenzlängen genaue und dichte Zuordnungen realisieren lassen (N >= 2 Bilder). Vorschlagsgemäß werden für diesen Fall keine statistischen Muster verwendet, sondern die besagten und anders kodierten optischen Muster, so dass der eingangs beschriebene Nachteil bei sehr kurzen Sequenzen (erhöhte Fehlzuordnungen und dadurch erhöhtes Rauschniveau bei der Punktzuordnung) nicht gegeben ist. Mit Veränderung eines Streifenmusters anstatt der Veränderung eines statistischen Musters ist die Punktzuordnungsgüte für sehr kurze Sequenzen deutlich erhöht, da keine lokalen Fehlzuordnungen auftreten. Die Mehrdeutigkeit, welche sich bei der Punktzuordnung zwischen Streifenbildsequenzen ergeben, wird durch die Tiefenlimitierung des Objektes überbrückt. Weiterhin wird keine diskrete Verschiebung des Streifenmusters vorausgesetzt, sondern es kann eine beliebige Verschiebung des Streifenmusters erfolgen. Mit diesem Ansatz lassen sich also mit kurzer Messzeit dichte und genaue Punktzuordnung realisieren. Aufgrund der verkürzten Mess-Sequenz ist die Auswertezeit ebenfalls im Vergleich zum Ansatz mit verschobenen statistischen Mustern ohne tiefenlimitierte Objekte verkleinert.

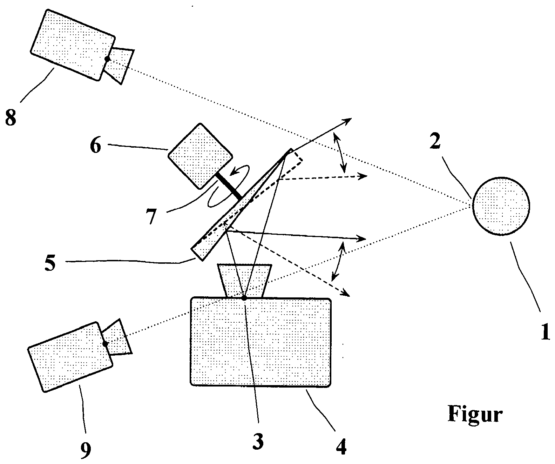

Die Erfindung soll nachstehend anhand einer in der Zeichnung dargestellten Vorrichtung zur schnellen und hochgenauen 3D-Messung von Objekten mit eingeschränkter Tiefenabweichung zum einem Referenzobjekt näher erläutert werden.

Das besagte (und aus Übersichtsgründen nicht in der Zeichnung dargestellte Referenzobjekt) wird in an sich bekannter Weise (z. B. mittels Streifenprojektion mit Graycode, oder durch Projektion von statistischen Mustern) dreidimensional vermessen, um für die 3D-Vermessung eines zu untersuchenden Objektes 1 näherungsweise Bildkoordinaten der zu erwartenden Korrespondenzpunkte von Bildaufnahmen zu erfassen. Diese Referenzkorrespondenzpunkte werden rechentechnisch gespeichert.

Die Vermessung des Referenzobjektes ist damit abgeschlossen; die gespeicherten Referenzkorrespondenzpunkte stehen zum Vergleich für die 3D-Vermessung des in der Zeichnung dargestellten Objektes 1, welches eine zum vorgenannten Referenzobjekt eingeschränkte Tiefenabweichung aufweist, zur Verfügung.

Von dem Objekt 1 soll eine Oberfläche 2 dreidimensional vermessen und rekonstruiert werden. Zu diesem Zweck wird ein Streifenmuster von einem Lichtbild 3 in einem Projektor 4 über einen Umlenkspiegel 5 auf die Oberfläche 2 projiziert. Der Umlenkspiegel 5 ist an einem Motor 6 befestigt, und zwar derart, dass dessen Achse 7 die Ebene des Umlenkspiegels 5 nahezu, aber nicht ganz, senkrecht schneidet. Durch Rotation des Motors 6 wird der Umlenkspiegel 5 in Bewegung versetzt, und durch die leichte Verkippung der Spiegelebenennormale zur Achse 7 des Motors 6 wird eine taumelnde Bewegung des Umlenkspiegels 5 bewirkt. Aufgrund dieser taumelnden Bewegung des Umlenkspiegels 5 bewegt sich das projizierte Bild des Lichtbilds 3 nun ebenfalls in taumelnder Art und Weise über die zu vermessende Oberfläche 2 des Objekts 1. Der während einer vollständigen Umdrehung des Spiegels stets beleuchtete Bereich stellt dabei die Begrenzung des Messvolumens dar.

Mit zwei zueinander synchronisierten Kameras 8, 9, welche vorab bezüglich der inneren und äußeren Parameter des Stereosystems kalibriert worden sind, wird von unterschiedlichen Standorten eine Anzahl von beispielsweise 3 Bildern aufgenommen.

Diese Stereobildsequenz wird an einen Rechner (aus Gründen der Übersichtlichkeit nicht dargestellt) übertragen. Bei der rechentechnischen Auswertung der besagten Stereobild-sequenz werden unter Verwendung der etablierten Methode der Zeitkorrelation homologe Punkte in bekannter Weise einander zugeordnet, wobei der Suchraum auf eine Umgebung um die vorab ermittelten und abgespeicherten Referenzkorrespondenzpunkte eingeschränkt und die aus diesem Zuordnungsvorgang mit eingeschränktem Suchraum resultierenden Korrespondenzpunkte mit Hilfe ebenfalls bekannter Kalibrierparameter 3D-Punkte im Raum bestimmt werden. Diese Korrespondenzpunkte können dann je nach spezieller Anwendung weiterverarbeitet werden.

Durch die motorgesteuerte Bewegung des Umlenkspiegels 5 kann eine sehr schnelle Veränderung des projizierten Streifenmusters auf der zu vermessenden Oberfläche 2 und damit eine sehr schnelle hochauflösende Rekonstruktion der Oberfläche 2 erreicht werden. Anstatt des motorgesteuerten Spiegels könnten zur Mustervariation beispielsweise ein automatisches Zoomobjektiv (nicht beanspruchtes Beispiel), eine Dia-verschiebende Mechanik oder ein lichtveränderndes Element, beispielsweise ein lichtbeugendes oder lichtbrechendes Element, zum Einsatz kommen. Insbesondere könnten Diffraktiv-Optische Elemente (DOE) als lichtbeugendes Element verwendet werden, sei es durch Verwendung von digital schaltbaren Spatial-Light-Modulatoren, oder im einfachsten Fall durch mechanische Verschiebung des DOE, wobei hier jeweils eine kohärente Lichtquelle verwendet werden sollte. Zur Realisierung einer Strahlablenkung mittels lichtbrechendem Element könnte beispielsweise ein drehbarer Keil verwendet werden.

## Patentansprüche

1. Verfahren zur 3D-Messung von tiefenlimitierten Objekten, mit einer zu einem Referenzobjekt eingeschränkten Tiefenabweichung bei dem zumindest ein optisches Muster zur standortunterschiedlichen Detektion und dreidimensionalen Auswertung auf das Objekt abgebildet sowie in Lage und/oder Form beliebig verändert wird, bei dem während der Veränderung des zumindest einen optischen Musters wenigstens zwei standortunterschiedliche zueinander synchronisierte Bildsequenzen vom Objekt aufgenommen werden,
wobei
die Korrespondenzzuordnung der wenigstens zwei standortunterschiedlichen zueinander synchronisierten Bildsequenzen zwecks kurzer Messsequenzen in einem an die Tiefenlimitierung des Objektes angepassten, eingeschränkten Suchfeld festgelegt wird, wobei die wenigstens zwei standortunterschiedlichen zueinander synchronisierten Bildsequenzen an einen Rechner übertragen und zur Punktkorrespondenzfindung eine pixelweise Ähnlichkeitsanalyse zeitlicher Grauwertverläufe angewendet wird und
homologe Punkte einander zugeordnet werden, wobei
der Suchraum für die homologen Punkte auf eine Umgebung um vorab ermittelte und abgespeicherte Referenzkorrespondenzpunkte auf dem Referenzobjekt eingeschränkt ist.

2. Verfahren nach Anspruch 1,
wobei als optisches Muster ein Streifenmuster auf das Objekt projiziert und über dieses beliebig verschoben wird.

3. Verfahren nach Anspruch 1,
wobei als optisches Muster ein statistisches Muster verwendet wird, und dieses in einer Rotationsbewegung über das Objekt verschoben wird.

4. Vorrichtung zur 3D-Messung von tiefenlimitierten Objekten, mit einer zu einem Referenzobjekt eingeschränkten Tiefenabweichung, umfassend zumindest eine Lichtquelle (4) zum Bestrahlen eines Objektes (1) mit zumindest einem standortunterschiedlich zu detektierenden optischen Muster und wenigstens zwei zueinander synchronisierte Kameras (8, 9) an unterschiedlichen Standorten zur Aufnahme von wenigstens zwei standortunterschiedlichen Bildsequenzen des Objektes (1),
und mit wenigstens einem im Strahlenlang der Lichtquelle (4) zum Objekt (1) angeordneten, den Lichtstrahl beeinflussenden Element zur beliebigen Veränderung des zumindest einen auf das Objekt abgebildeten Musters in Lage und/oder Form,
wobei die Vorrichtung geeignet ist die wenigstens zwei standortunterschiedlichen Bildsequenzen an einen Rechner zu übertragen,
und eine Korrespondenzzuordnung der wenigstens zwei standortunterschiedlichen Bildsequenzen durch eine pixelweise Ähnlichkeitsanalyse zeitlicher Grauwertverläufe zwecks kurzer Messsequenzen festzulegen, wobei der Suchraum an die Tiefenlimitierung des Objektes angepasst und eingeschränkt wird, wobei der Suchraum für die homologen Punkte auf eine Umgebung um vorab ermittelte und abgespeicherte Referenzkorrespondenzpunkte auf dem Referenzobjekt eingeschränkt ist.

5. Vorrichtung nach Anspruch 4,
wobei als wenigstens ein den Lichtstrahl veränderndes Element ein rotierender oder vibrierender Spiegel (5) vorgesehen ist.

6. Vorrichtung nach Anspruch 4,
wobei als wenigstens ein den Lichtstrahl veränderndes Element ein veränderliches lichtbeugendes oder lichtbrechendes Element, vorgesehen ist.

7. Vorrichtung nach Anspruch 4,
wobei als zumindest eine Lichtquelle (4) eine steuerbare Pulslichtquelle vorgesehen ist.

8. Vorrichtung nach Anspruch 4,
wobei als zumindest eine Lichtquelle (4) eine Konstantlichtquelle vorgesehen ist.

9. Vorrichtung nach Anspruch 4,
wobei als wenigstens ein den Lichtstrahl veränderndes Element eine Dia-verschiebende Mechanik vorgesehen ist.

## Claims

1. A method for three-dimensionally measuring depth-limited objects having a restricted depth deviation from a reference object, in which at least one optical pattern for detecting in different locations and three-dimensionally evaluating is mapped onto the object and arbitrarily changed in its position and/or shape, in which, during changing the at least one optical pattern, at least two mutually synchronized image sequences are taken from the object in different locations,
wherein
the correspondence allocation of the at least two mutually synchronized image sequences in different locations is defined, for the purpose of short measurement sequences, on a restricted search field adapted to the depth limitation of the object, wherein the at least two mutually synchronized image sequences in different locations are transmitted to a computer, and a similarity analysis of temporal grey value progressions is applied pixel by pixel for finding point correspondence, and homologous points are allocated to one another, wherein the search space for the homologous points is restricted to an environment by reference correspondence points on the reference object which are obtained and stored in advance.

2. The method according to claim 1,
wherein, as the optical pattern, a striped pattern is projected onto the object and arbitrarily shifted across it.

3. The method according to claim 1,
wherein, as the optical pattern, a statistical pattern is used and is shifted across the object in a rotational movement.

4. A device for three-dimensionally measuring depth-limited objects having a restricted depth deviation from a reference object, comprising at least one light source (4) for irradiating an object (1) with at least one optical pattern to be detected in different locations, and at least two mutually synchronized cameras (8, 9) in different locations for taking at least two image sequences of the object (1) in different locations,
and having at least one element arranged in the beam path from the light source (4) to the object (1) and influencing the light beam for arbitrarily changing the at least one pattern mapped onto the object in its position and/or shape,
wherein the device is suitable to transmit the at least two image sequences in different locations to a computer, and to define a correspondence allocation of the at least two image sequences in different locations by a similarity analysis pixel by pixel of temporal grey value progressions for the purpose of short measurement sequences, wherein the search space is adapted and restricted to the depth limitation of the object, wherein the search space for the homologous points is restricted to an environment by reference correspondence points on the reference object which are obtained and stored in advance.

5. The device according to claim 4,
wherein, as at least one element changing the light beam, a rotating or vibrating mirror (5) is provided.

6. The device according to claim 4,
wherein, as at least one element changing the light beam, a variable light-diffracting or light-refracting element is provided.

7. The device according to claim 4,
wherein, as at least one light source (4), a controllable pulse light source is provided.

8. The device according to claim 4,
wherein, as at least one light source (4), a constant light source is provided.

9. The device according to claim 4,
wherein, as at least one element changing the light beam, a slide-shifting mechanical system is provided.

## Revendications

1. Procédé pour la mesure en trois dimensions d'objets limités en profondeur et ayant un écart de profondeur restreint par rapport à un objet de référence, dans lequel au moins un motif optique est reproduit sur l'objet pour la détection différenciée en fonction de l'emplacement et pour l'évaluation en trois dimensions, et est facultativement modifié en position et/ou en forme, et dans lequel, pendant la modification dudit au moins un motif optique, au moins deux séquences d'images de l'objet différenciées en fonction de l'emplacement et synchronisées entre elles sont enregistrées,
dans lequel
l'association de correspondance desdites au moins deux séquences d'images différenciées en fonction de l'emplacement et synchronisées entre elles est fixée dans un champ de recherche restreint adapté à la limitation de profondeur de l'objet, dans le but de réaliser de courtes séquences de mesure,
lesdites au moins deux séquences d'images différenciées en fonction de l'emplacement et synchronisées entre elles sont transmises à un calculateur, et une analyse de similarité pixel par pixel des évolutions temporelles des valeurs de gris est mise en oeuvre pour trouver la correspondance de points, et des points homologues sont associés les uns aux autres,
l'espace de recherche pour les points homologues est restreint à un environnement autour de points de correspondance de référence, précédemment déterminés et mémorisés, sur l'objet de référence.

2. Procédé selon la revendication 1,
dans lequel
à titre de motif optique, un motif de rayures est projeté sur l'objet et est déplacé facultativement par-dessus celui-ci.

3. Procédé selon la revendication 1,
dans lequel
un motif statistique est utilisé à titre de motif optique, et celui-ci est déplacé en un mouvement de rotation par-dessus l'objet.

4. Dispositif pour la mesure en trois dimensions d'objets limités en profondeur et ayant un écart de profondeur restreint par rapport à un objet de référence, comprenant au moins une source de lumière (4) pour l'irradiation d'un objet (1) avec au moins un motif optique à détecter de façon différenciée en fonction de l'emplacement, et au moins deux caméras (8, 9) synchronisées entre elles à des emplacements différents pour l'enregistrement d'au moins deux séquences d'images de l'objet (1) différenciées en fonction de l'emplacement,
et comprenant au moins un élément qui est disposé dans le chemin optique de la source de lumière (4) vers l'objet (1) et qui influence le faisceau lumineux afin de modifier facultativement la position et/ou la forme dudit au moins un motif reproduit sur l'objet,
le dispositif étant adapté pour transmettre à un calculateur lesdites au moins deux séquences d'images différenciées en fonction de l'emplacement, et pour fixer une association de correspondance desdites au moins deux séquences d'images différenciées en fonction de l'emplacement par une analyse de similarité pixel par pixel des évolutions temporelles de valeurs de gris, dans le but de réaliser de courtes séquences de mesure,
l'espace de recherche étant adapté à la limitation de profondeur de l'objet et étant restreint, l'espace de recherche pour les points homologues étant restreint à un environnement autour de points de correspondance de référence, précédemment déterminés et mémorisés, sur l'objet de référence.

5. Dispositif selon la revendication 4,
dans lequel, à titre d'au moins un élément modifiant le faisceau lumineux, il est prévu un miroir rotatif ou vibrant (5).

6. Dispositif selon la revendication 4,
dans lequel, à titre d'au moins un élément modifiant le faisceau lumineux, il est prévu un élément variable de diffraction de lumière ou de réfraction de lumière.

7. Dispositif selon la revendication 4,
dans lequel, à titre d'au moins une source de lumière (4), il est prévu une source de lumière pulsée contrôlable.

8. Dispositif selon la revendication 4,
dans lequel, à titre d'au moins une source de lumière (4), il est prévu une source de lumière constante.

9. Dispositif selon la revendication 4,
dans lequel, à titre d'au moins un élément modifiant le faisceau lumineux, il est prévu un mécanisme de glissement de diapositive.
